# FASCICULE DE BREVET EUROPEEN

(11) **EP 3 825 918 B1**
(45) Date de publication et mention de la délivrance du brevet: **25.05.2022**
(21) Numéro de dépôt: 21150258.8
(22) Date de dépôt: 30.01.2018
(51) Int. Cl.: G06K 19/077

(54) **ETIQUETTE À PUCE ÉLECTRONIQUE POUR BARRIQUE ET PROCÉDÉ DE FABRICATION ASSOCIÉ**
ETIKETT MIT ELEKTRONISCHEM CHIP FÜR BARRIQUE, UND ENTSPRECHENDES HERSTELLUNGSVERFAHREN
LABEL WITH ELECTRONIC CHIP FOR A BARREL AND METHOD FOR MANUFACTURING SAME

(30) Priorité: 01.02.2017 FR 1750836
(43) Date de publication de la demande: 26.05.2021
(62) Demande divisionnaire de: 18701208.3
(73) Titulaire: Wid Group, 27300 Bernay (FR)
(72) Inventeur: MONGRENIER, Alexandre, 27500 MANNEVILLE-SUR-RISLE (FR); SUDRE, Benoît, 91190 GIF SUR YVETTE (FR)
(74) Mandataire: Lavoix

(56) Documents cités:
- WO-A1-2012/053716
- CN-U- 204 390 270
- US-A1- 2003 132 302
- US-A1- 2011 253 715

## Description

La présente invention concerne une étiquette à puce électronique. L'invention se rapporte également à un conteneur de boisson alcoolisée revêtu d'une telle étiquette, à un ensemble comportant un conteneur de boisson alcoolisée et une telle étiquette, ainsi qu'à un procédé de fabrication de l'étiquette.

Dans le domaine alimentaire ou cosmétique, des puces électroniques sont couramment utilisées pour permettre d'assurer la traçabilité des produits. Les puces électroniques sont alors généralement apposées sur des conteneurs de tels produits.

Pour certains produits, notamment dans le domaine du luxe comme les vins, il est souhaitable que la puce électronique soit peu visible, la présence de celle-ci dépréciant la valeur du produit.

Pour cela, il est connu de positionner la puce électronique dans un endroit non accessible, par exemple derrière une étiquette d'une bouteille ce qui permet de conserver la valeur du contenu de la bouteille.

Toutefois, un éventuel contrefacteur ne sait pas que la puce électronique est présente et peut être tenté de proposer une bouteille contrefaite en pensant que la bouteille n'est pas vraiment protégée. L'aspect dissuasif de la puce électronique est ainsi perdu.

Il existe donc un besoin pour une puce électronique visible pour un éventuel contrefacteur mais peu visible pour un consommateur.

A cet effet, la présente description porte notamment sur une étiquette à puce électronique destinée à être déposée sur une barrique, notamment de boisson alcoolisée, l'étiquette comportant une première couche, dite couche support, une deuxième couche, dite couche à puce électronique, comprenant au moins une puce électronique et une antenne connectée à la puce électronique, la couche à puce électronique comportant une première face en contact avec la couche support et une deuxième face opposée à la première face, et une troisième couche, dite couche de personnalisation, comportant une première face en contact avec la deuxième face de la couche à puce électronique et une deuxième face opposée à la première face de la couche de personnalisation, dans laquelle chaque couche comporte deux faces et les trois couches sont superposées selon une direction d'empilement, et dans laquelle la couche de personnalisation comprend au moins une sous-couche, dite sous-couche métallique, réalisée dans un matériau métallique, la sous-couche métallique présentant une épaisseur le long de la direction d'empilement inférieure ou égale à 35 micromètres.

Suivant des modes de réalisation particuliers, l'étiquette à puce électronique comprend une ou plusieurs des caractéristiques suivantes, prise(s) isolément ou suivant toutes les combinaisons techniquement possibles :
- le matériau métallique est de l'argent ou de l'aluminium.
- l'étiquette comporte une couche de protection en contact avec la deuxième face de la couche de personnalisation, la couche de protection comprenant au moins une sous-couche de couverture laissant un utilisateur voir la couche de personnalisation à travers la sous-couche de couverture.
- la couche de personnalisation comprend, en outre, une sous-couche d'interfaçage réalisée en polyéthylène téréphtalate, la sous-couche d'interfaçage étant en contact d'une part avec la couche à puce électronique et d'autre part avec la sous-couche métallique.
- la couche de personnalisation présente une sous-couche de décoration destinée à donner l'impression visuelle à un utilisateur que l'étiquette est décorée.

La présente description décrit également une barrique de liquide, notamment de boisson alcoolisée comportant une surface sur laquelle l'étiquette est collée.

La présente description décrit aussi un ensemble comportant une barrique de liquide, notamment de boisson alcoolisée, et une étiquette dans lequel la barrique de liquide présente une surface ayant une première couleur apparente pour un utilisateur, et dans lequel la sous-couche de décoration de la couche de personnalisation de l'étiquette présente également une deuxième couleur apparente pour l'utilisateur, la première et la deuxième couleur apparente étant identiques.

La présente description décrit aussi un procédé de fabrication de l'étiquette telle que précédemment décrite, le procédé comportant au moins les étapes suivantes : la fourniture d'un substrat; la gravure d'une puce électronique et d'une antenne sur le substrat pour former une couche à puce électronique; le dépôt d'une couche de personnalisation sur la couche à puce électronique selon la direction d'empilement pour former un sandwich, et le dépôt du sandwich sur une couche support selon la direction d'empilement pour former une structure multicouche.

D'autres caractéristiques et avantages de l'invention apparaîtront à la lecture de la description qui suit de modes de réalisation de l'invention, donnée à titre d'exemple uniquement et en référence aux dessins qui sont :
- figure 1, une vue schématique d'un exemple d'ensemble comportant une bouteille de boisson alcoolisée et une étiquette à puce électronique, la bouteille étant munie de l'étiquette à puce électronique,
- figure 2, une vue schématique de l'étiquette à puce électronique de la figure 1,
- figure 3, une vue schématique d'une couche de protection de l'étiquette à puce électronique de la figure 1, et
- figure 4, une vue schématique d'un autre exemple d'ensemble comportant une barrique de boisson alcoolisée munie d'une étiquette à puce électronique.

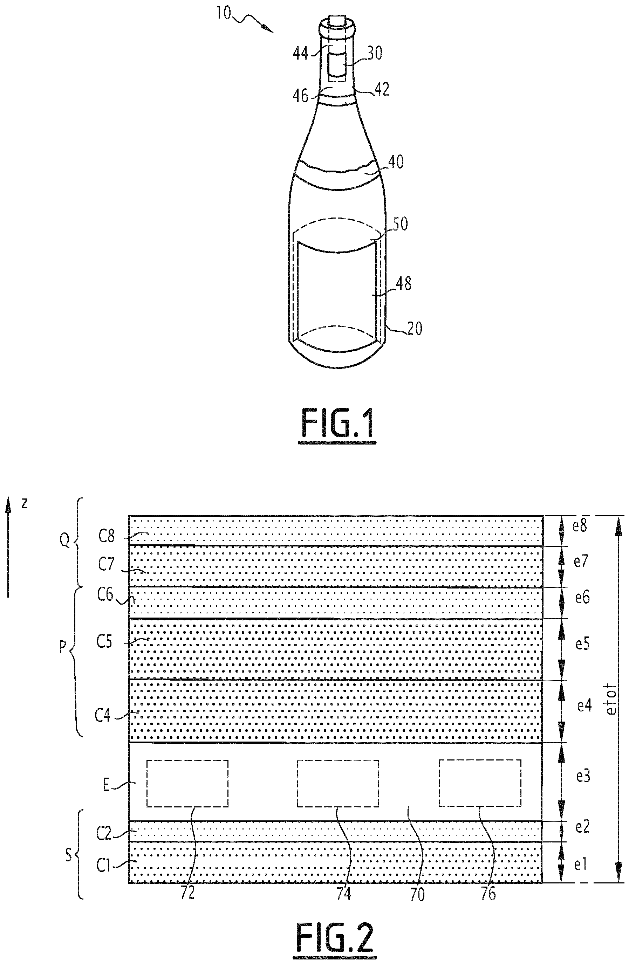

Un ensemble 10 comportant une bouteille 20 de boisson alcoolisée et une étiquette à puce électronique 30 est représenté sur la figure 1.

La bouteille 20 de boisson alcoolisée est un premier conteneur de boisson alcoolisée.

La bouteille 20 est munie de l'étiquette à puce électronique 30 pour identifier la bouteille.

La bouteille 20 contient une substance liquide 40.

Selon l'exemple proposé, la substance liquide 40 est du vin.

En variante, la substance liquide 40 est de l'alcool.

Selon une autre variante, la substance liquide 40 est du spiritueux.

Dans ces trois cas, la bouteille 20 est une bouteille de boisson alcoolisée.

Selon un autre mode de réalisation, la bouteille 20 est une bouteille de parfum.

Dans chacun de ces cas, la bouteille 20 est une bouteille de liquide.

La bouteille est réalisée en verre.

Selon une variante, la bouteille est réalisée en plastique.

La bouteille 20 comporte un fût, un fond, une épaule et un col.

Le fût est la partie principale et la plus large de la bouteille 20. Le fût est parfois désigné par l'expression « corps ».

Le fond ferme le fût pour que la bouteille 20 puisse être posée facilement sur une surface plane. Selon les cas, le fond est plat, piqué (convexe) ou semi-piqué.

L'épaule est la partie évasée qui relie le col au fût.

Le col correspond à la partie effilée au sommet. Le col délimite un espace usuellement appelé goulot 42.

Le goulot 42 comprend généralement une collerette en saillie par rapport à la surface extérieure du goulot 42 et décalée par rapport à l'extrémité supérieure du goulot 44.

Un bouchon 44 est inséré dans le goulot 42.

Une capsule de surbouchage 46 surmonte le bouchon 44.

La capsule de surbouchage 46 est généralement métallique (étain ou aluminium) et comprend une jupe qui s'étend depuis l'extrémité supérieure du goulot 42 sur une certaine hauteur, de l'ordre de 5 cm à 6 cm. Ainsi, le bord inférieur de la capsule de surbouchage 46 est décalé vers le bas par rapport à la collerette d'une distance de l'ordre de 3 à 4 cm.

Lors de l'ouverture de la bouteille 20, la capsule de surbouchage 46 est découpée à l'aide d'un outil tranchant selon une ligne de découpe positionnée juste au-dessus de la collerette. Après une telle découpe, la partie supérieure de la capsule de surbouchage 46 est retirée pour permettre d'extraire le bouchon 44. La partie inférieure de la capsule de surbouchage 46 sous forme d'un manchon est conservée sur la bouteille 20.

Une étiquette 48 et une contre-étiquette 50 sont apposées sur le corps.

L'étiquette 48 est parfois qualifiée d'« étiquette principale ».

Selon l'exemple de la figure 1, l'étiquette à puce électronique 30 est apposée sur la jupe de la capsule de surbouchage 46.

La jupe de la capsule de surbouchage 46 définit une surface de la bouteille 20 ayant une première couleur apparente pour un utilisateur.

Par exemple, la première couleur apparente est le rouge.

Dans la suite de la description, l'étiquette à puce électronique 30 est dénommée puce 30. Les termes « tag » ou « module électronique » sont parfois également utilisés pour désigner l'étiquette à puce électronique 30.

Néanmoins, d'autres localisations pour la puce 30 sont également envisageables.

Par exemple, sur le col de la bouteille, le fût de la bouteille, sur l'étiquette principale 48, ou sur le bouchon de la bouteille.

La puce 30 est représentée sur la figure 2.

La puce 30 présente une forme cylindrique dont la base est rectangulaire à bords arrondis. Il est ainsi défini pour la puce deux grands côtés et deux petits côtés, parallèles entre eux, et perpendiculaires aux grands côtés tandis que les deux grands côtés sont parallèles entre eux.

Selon l'exemple proposé, un grand côté présente une dimension de 35 mm (millimètres) et un petit côté présente une dimension de 21 mm.

Les quatre bords sont identiques et arrondis.

En variante, la puce 30 présente une autre forme.

Par exemple, la base de la puce 30 présente une forme carrée.

Selon un autre exemple, la base de la puce 30 présente une forme ovale.

La puce 30 représentée sur la figure 2 présente une structure multicouche. L'expression « multicouche » indique que la puce est formée d'un ensemble de couches superposées le long d'une direction dite direction d'empilement Z.

La direction d'empilement est symbolisée par un axe Z sur la figure 2. Dans la suite de la description, la direction d'empilement est notée direction d'empilement Z.

En outre, pour la suite, la dimension d'un objet selon la direction d'empilement Z est appelée épaisseur.

La puce 30 présente une épaisseur totale eₜₒₜ.

L'épaisseur totale eₜₒₜ est égale à la somme des épaisseurs de chaque couche formant la puce.

L'épaisseur totale eₜₒₜ est inférieure ou égale à 0,3 mm.

L'épaisseur totale eₜₒₜ de la puce est, par exemple, comprise entre 200 µm et 300 µm (microns).

L'expression « comprise » est à entendre au sens large. Ainsi, une grandeur A est comprise entre une première valeur A1 et une deuxième valeur A2 lorsque, d'une part, la grandeur A est supérieure ou égale à la première valeur A1 et, d'autre part, la grandeur A est inférieure ou égale à la deuxième valeur A2.

Dans l'exemple décrit, la puce 30 comporte quatre couches S, E, P, Q.

Chaque couche S, E, P, Q est une couche planaire.

Chaque couche S, E, P, Q présente deux faces.

Dans l'exemple décrit, les faces de chaque couche S, E, P, Q sont parallèles entre elles.

Les couches S, P, Q, comportent des sous-couches C1, C2, C4, C5, C6, C7, C8.

Chaque sous-couche C1, C2, C4, C5, C6, C7, C8 est une sous-couche planaire.

Chaque sous-couche C1, C2, C4, C5, C6, C7, C8 présente deux faces.

Dans l'exemple décrit, les faces sont parallèles entre elles.

Dans l'exemple décrit, les faces sont également identiques.

Chaque couche S, E, P, Q présente une forme cylindrique présentant la même base que la puce 30.

En l'occurrence, la base de chaque couche S, E, P, Q présente une forme rectangulaire à bords arrondis.

Les quatre couches S, E, P, Q de la puce 30 sont maintenues ensemble par une colle.

La colle est, par exemple, une colle thermofusible.

La puce 30 comporte une première couche, dite couche support S, une deuxième couche, dite couche à puce électronique E, une troisième couche, dite couche de personnalisation P et une quatrième couche, dite couche de protection Q.

Il est défini pour la puce 30 un haut et un bas selon la direction d'empilement Z.

La couche support S est située vers le bas. La couche de protection Q est située vers le haut.

Dans la suite de la description, les couches S, E, P, Q sont décrites dans l'ordre d'empilement des couches, du bas vers le haut, selon la direction d'empilement Z.

La couche support S est propre à supporter les autres couches de la puce 30 et est propre à lier la puce 30 à la bouteille 20.

La couche support S comporte une sous-couche de transfert C1 et une sous-couche adhésive C2.

La sous-couche de transfert C1 est amovible et destinée à être retirée au moment du collage de la puce 30 sur un objet à identifier.

La sous-couche de transfert C1 présente une épaisseur e₁ inférieure ou égale à 30 µm.

L'épaisseur e₁ de la sous-couche de transfert C1 est, par exemple, comprise entre 5 µm et 25 µm.

Selon un mode de réalisation particulier, l'épaisseur e₁ de la sous-couche de transfert C1 est comprise entre 15 µm et 25 µm.

Dans le cas particulier de la figure 2, l'épaisseur e₁ de la sous-couche de transfert C1 est égale à 20 µm.

La sous-couche de transfert C1 est, par exemple, réalisée en

La sous-couche adhésive C2 est propre à permettre de coller la puce 32 sur une surface.

La sous-couche adhésive C2 présente une épaisseur e₂ inférieure ou égale à 30 µm.

L'épaisseur e₂ de la sous-couche adhésive C2 est, par exemple, comprise entre 5 µm et 25 µm.

Selon un mode de réalisation particulier, l'épaisseur e₂ de la sous-couche adhésive C2 est comprise entre 5 µm et 15 µm.

Dans le cas particulier de la figure 2, l'épaisseur e₂ de la sous-couche adhésive C2 est égale à 10 µm.

La sous-couche adhésive C2 est réalisée dans un matériau adhésif.

Le matériau adhésif est propre à adhérer à une surface plane, convexe ou concave.

La couche à puce électronique E comporte un substrat 70, un microprocesseur 72, une mémoire 74 et une antenne 76.

La première face de la couche à puce électronique E est en contact avec la couche support S.

En particulier, la première face de la couche à puce électronique E est en contact avec la sous-couche adhésive C2 de la couche support S.

La deuxième face de la couche à puce électronique E est en contact avec la couche de personnalisation P.

La couche à puce électronique E présente une épaisseur e₃ inférieure ou égale à 50 µm.

Le substrat 70 est, par exemple, réalisé en silicium.

Le microprocesseur 72, la mémoire 74 et l'antenne 76 sont gravés sur le substrat 70.

Le microprocesseur 72 est propre à interagir avec l'antenne 76 pour échanger des signaux.

La mémoire 74 est propre à mémoriser des informations.

L'ensemble du microprocesseur 72 et de la mémoire 74 forme la partie électronique proprement dite. Une telle partie électronique est parfois dénommée « micropuce électronique » en référence à l'aire occupée par l'ensemble qui est inférieure à 1 mm².

La première face de la couche de personnalisation P est en contact avec la deuxième face de la couche à puce électronique E.

La deuxième face de la couche de personnalisation P est en contact avec la couche de protection Q.

La couche de personnalisation P comprend une sous-couche d'interfaçage C4, une sous-couche métallique C5 et une sous-couche de décoration C6 superposées selon la direction d'empilement.

La sous-couche d'interfaçage C4 est propre à réaliser une interface entre la couche à puce électronique E d'une part et la sous-couche métallique C5 d'autre part.

La sous-couche d'interfaçage C4 est en contact d'une part avec la couche à puce électronique E et d'autre part avec la sous-couche métallique C4.

La sous-couche d'interfaçage C4 présente une épaisseur e₄ inférieure ou égale à 50 µm. Selon un mode de réalisation particulier, l'épaisseur e₄ de la sous-couche d'interfaçage C4 est comprise entre 25 µm et 35 µm.

Dans le cas particulier de la figure 2, l'épaisseur e₄ de la sous-couche d'interfaçage C4 est égale à 30 µm.

La sous-couche d'interfaçage C4 est réalisée en polyéthylène téréphtalate (PET).

La sous-couche métallique C5 présente une épaisseur e₅ inférieure ou égale à 35 µm.

Selon un mode de réalisation particulier, l'épaisseur e₅ de la sous-couche métallique C5 est comprise entre 25 µm et 35 µm.

Dans le cas particulier de la figure 2, l'épaisseur e₅ de la sous-couche métallique C5 est égale à 30 µm.

La sous-couche métallique C5 est réalisée dans un matériau métallique.

Selon l'exemple décrit, le matériau métallique est de l'argent.

Selon une variante, le matériau métallique est un alliage à base d'argent.

Selon encore un autre mode de réalisation, le matériau métallique est de l'aluminium.

Selon une variante, le matériau métallique est un alliage à base d'aluminium et/ou d'argent. La sous-couche de décoration C6 présente une épaisseur e₆ inférieure ou égale à 20 µm.

Selon un mode de réalisation particulier, l'épaisseur e₆ de la sous-couche de décoration C6 est comprise entre 10 µm et 20 µm.

Dans le cas particulier de la figure 2, l'épaisseur e₆ de la sous-couche de décoration C6 est égale à 15 µm.

Selon l'exemple proposé, la sous-couche de décoration C6 est un aplat d'encre.

La sous-couche de décoration C6 présente une deuxième couleur apparente pour l'utilisateur.

Selon l'exemple décrit, la deuxième couleur apparente est également le rouge.

La première couleur apparente de la surface de la bouteille 20 définie par la jupe de la capsule de surbouchage 46 et la deuxième couleur apparente de la sous-couche de décoration C6 sont, de préférence, identiques.

Selon une variante, la couche de personnalisation P est dépourvue de sous-couche de décoration C6.

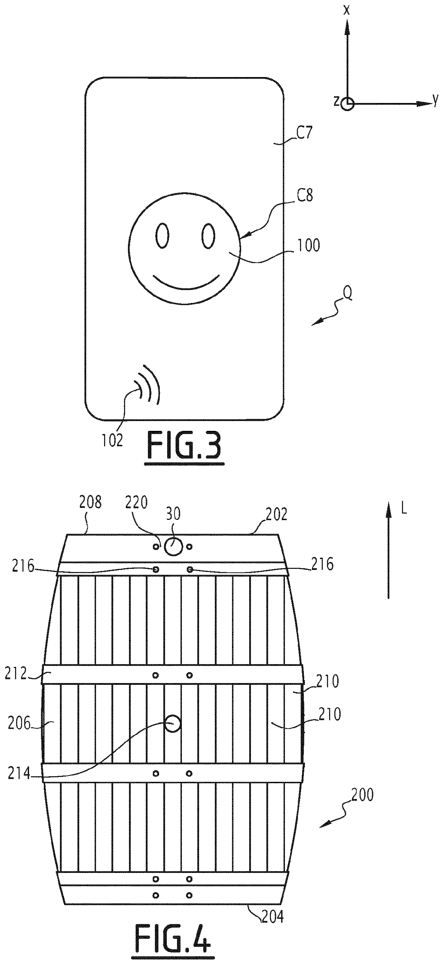

La couche de protection Q est représentée sur la figure 3.

La couche de protection Q présente deux grands côtés et deux petits côtés.

Les deux grands côtés s'étendent suivant une direction longitudinale X perpendiculaires à la direction d'empilement Z.

Les deux petits côtés s'étendent suivant une direction transversale Y perpendiculaire à la direction longitudinale X et à la direction d'empilement Z.

La couche de protection Q est propre à protéger les autres couches de la puce 30.

La couche de protection Q est en contact avec la deuxième face de la couche de personnalisation P. La couche de protection Q comprend une sous-couche de couverture C7 et une sous-couche d'ornement C8.

La sous-couche de couverture C7 est propre à protéger les autres couches et à laisser passer au moins 80 % des longueurs d'onde visibles par un utilisateur à travers la sous-couche de couverture C7.

La sous-couche de couverture C7 définit une surface selon les directions longitudinale X et transversale Y.

La sous-couche de couverture C7 présente une épaisseur e₇ inférieure ou égale à 30 µm.

Selon un mode de réalisation particulier, l'épaisseur e₇ de la sous-couche de couverture C7 est comprise entre 15 µm et 25 µm.

Dans le cas particulier de la figure 2, l'épaisseur e₇ de la sous-couche de couverture C7 est égale à 20 µm.

La sous-couche de couverture C7 est, par exemple, réalisée en polypropylène (PP).

La sous-couche d'ornement C8 forme un premier motif 100 et un deuxième motif 102 qui sont notamment visibles à la figure 3.

Le premier motif 100 comprend, par exemple, un signe distinctif.

Le deuxième motif 102 comprend, par exemple, un pictogramme indiquant un protocole de communication.

La sous-couche d'ornement C8 définit une surface selon les directions longitudinale X et transversale Y.

La surface de la sous-couche d'ornement C8 est inférieure ou égale à 75 % de la surface de la sous-couche de couverture C7.

De préférence, la surface de la sous-couche d'ornement C8 est inférieure ou égale à 50 % de la surface de la sous-couche de couverture C7.

Il est ainsi entendu qu'un utilisateur voit la couche de personnalisation P en regardant à travers la couche de protection Q.

La sous-couche d'ornement C8 présente une épaisseur e₈ inférieure ou égale à 20 µm.

Selon un mode de réalisation particulier, l'épaisseur e₈ de la sous-couche d'ornement C8 est comprise entre 10 µm et 20 µm.

Dans le cas particulier de la figure 2, l'épaisseur e₈ de la sous-couche d'ornement C8 est égale à 15 µm.

La sous-couche d'ornement C8 est, par exemple, réalisée à l'encre.

Selon une variante, la couche de protection Q comprend la sous-couche d'ornement C8 et la sous-couche de couverture C7 du bas vers le haut selon la direction d'empilement Z.

Le fonctionnement de la puce 30 est maintenant décrit.

La puce 30 est destinée à être utilisée par un consommateur final.

La bouteille de boisson alcoolisée 20 présentant une capsule de surbouchage 46 munie de la puce 30 est présente sur un rayon chez un revendeur ou dans un supermarché. Le consommateur désirant acheter une bouteille de boisson alcoolisée chez le revendeur ou dans le supermarché trouve la bouteille 20.

Le consommateur voit la puce 30 qui est apparente sur la bouteille 20. L'aspect visuel de la puce 30 est raccord avec l'aspect visuel de la capsule de surbouchage 46 à laquelle la puce 30 est collée. Le consommateur ne voit pas la couche à puce électronique E de la puce 30. Ainsi, le consommateur a l'impression visuelle que la puce 30 est une simple étiquette.

Le consommateur considère donc qu'il n'y a pas de dépréciation du produit contenu dans la bouteille

Cependant, l'éventuel contrefacteur voit le deuxième motif 102 de la sous-couche d'ornement C8 indiquant un protocole de communication et de ce fait la présence d'une puce électronique.

L'éventuel contrefacteur peut lire à l'aide d'un lecteur de puce électronique, par exemple un téléphone mobile sans fil, des informations stockées dans la mémoire 74 de la puce 30.

En effet, la puce 12 est associée à des informations que la mémoire 74 de la puce 30 mémorise.

Par exemple, la mémoire 74 de la puce 30 mémorise des informations relatives au profil du vin que la bouteille 20 contient.

Par exemple, la mémoire 74 de la puce 30 mémorise des informations relatives à l'appellation du vin, c'est-à-dire le nom donné au vin.

Selon un autre exemple, la mémoire 74 mémorise des informations relatives au millésime, c'est-à-dire l'année de récolte du raisin ayant servi à produire le vin.

Selon un autre exemple, la mémoire 74 de la puce 30 mémorise des informations relatives au(x) cépage(s) du raisin ayant servi à produire le vin, aux accords de mets pouvant être réalisés avec le vin contenu dans la bouteille 20, à la cuve dont provient le vin contenu dans la bouteille 20.

Selon un autre exemple, la mémoire 74 de la puce 30 mémorise des informations relatives au site de production, à un identifiant de la bouteille 20, à un identifiant du producteur de la bouteille 20, au nom du profil de la bouteille 20, des données de date et heure d'embouteillage, des données de date et heure de sortie de production.

Selon l'exemple décrit, la puce 30 est une puce NFC (en anglais « Near Field Communication » qui signifie « communication de champ proche »), permettant la lecture en champ proche (avec une distance maximum d'environ 4 cm entre la puce 30 de la bouteille 20 et un lecteur de puce électronique).

Le protocole de communication est alors de type communication en champ proche de type NFC défini selon les normes reconnues par le Forum NFC dont les normes ISO/CEI 14443-1 à ISO/CEI 14443-4.

Il est à noter que la norme NFC est une norme de communication sans fil (appelée communication en champ proche ou communication NFC) permettant de faire communiquer les puces électroniques avec un très large nombre d'appareils, notamment les téléphones mobiles sans fil.

Le contrefacteur n'est alors pas tenté de copier le produit. L'aspect dissuasif de la puce électronique 30 est ainsi conservé.

La puce électronique 30 est ainsi visible pour un éventuel contrefacteur mais peu visible pour un consommateur.

De plus, une telle puce électronique 30 présente l'avantage que l'épaisseur totale eₜₒₜ est inférieure à 0,3 millimètres, c'est-à-dire faible, ce qui assure une bonne discrétion.

Il est à noter que la sous-couche de décoration C6 donne l'impression visuelle à un utilisateur que l'étiquette est décorée,

Par ailleurs, la puce électronique 30 laisse passer les ondes radioélectriques pour la lecture des informations stockées dans la mémoire 74 malgré la présence d'un matériau métallique.

Enfin, la puce 30 présente des propriétés de résistance sur l'humidité et de tenue sur la matière.

La puce 30 permet également d'assurer une traçabilité optimale de la bouteille 20 et de la boisson alcoolisée contenue dans la bouteille 20 et ainsi d'éviter les contrefaçons.

En outre, la puce 30 est souple, et est donc capable de supporter une cadence rapide des étiqueteuses et d'épouser parfaitement la forme de la bouteille 20 à laquelle la puce 30 est apposée.

Bien entendu, selon les applications, la puce 30 est aisément personnalisable, ce qui ouvre des possibilités que n'ont pas les puces 30 de l'état de la technique.

Par exemple, a contrario de la problématique proposée, un fabricant pourrait souhaiter que la puce 30 soit très visible et en faire un argument marketing.

Cette facilité de la personnalisation provient du fait que la puce 30 présente l'avantage d'être simple à fabriquer.

Pour illustrer cette simplicité, un exemple de procédé de fabrication de la puce 30 est maintenant décrit.

Un substrat 70 est fourni.

Un microprocesseur 72, une mémoire 74 et une antenne 76 sont gravés sur le substrat 70 pour former la couche à puce électronique E.

La sous-couche de décoration C6 et la sous-couche d'ornement C8 sont réalisées par une technique de sérigraphie.

Selon les variantes, la sous-couche de décoration C6 et la sous-couche d'ornement C8 sont réalisées par une technique d'impression thermique, d'impression par jet d'encre, d'impression par transfert, d'impression au laser, d'impression offset, de flexographie, d'héliogravure.

La sérigraphie est suivie d'une étape de séchage par des rayons ultraviolets.

Les couches sont ensuite déposées les unes sur les autres de manière à former l'assemblage de couches qui conduit à obtenir la puce 30.

L'assemblage de couches est, par exemple, réalisé par une technique de dépôt conforme à une technique de dépôt selon l'état de la technique.

Le dépôt peut être manuel ou robotisé.

Ainsi, le procédé de fabrication comprend une étape de dépôt d'une couche de personnalisation P sur la couche à puce électronique E selon la direction d'empilement pour former un sandwich PE.

Le procédé de fabrication comprend une étape de dépôt du sandwich PE sur une couche support S selon la direction d'empilement.

Le procédé de fabrication comprend, en outre, une étape de dépôt d'une couche de protection Q sur la deuxième face de la couche de personnalisation pour former une structure multicouche.

La puce 30 peut être fabriquée par un fabricant d'étiquettes.

Préalablement à la mise en place de la puce 30 sur la bouteille 20, la sous-couche de transfert C1 est retirée. La puce 30 est collée à l'aide de la sous-couche adhésive C2 sur la capsule de surbouchage 46. La mise en place de la puce 30 sur la bouteille 20 peut être réalisée lors de l'embouteillage en utilisant une machine pour déposer des étiquettes.

Le procédé de fabrication proposé est aisé à mettre en place, de sorte que la puce 30 devient personnalisable à l'infini.

D'autres applications sont également envisageables pour l'ensemble formé par le conteneur et la puce 30.

Notamment, le conteneur de liquide, en l'occurrence de boisson alcoolisée, peut être différent.

Selon un exemple, le conteneur de boisson alcoolisée est une barrique de boisson alcoolisée 200 en référence à la figure 4.

La barrique 200 est munie de l'étiquette à puce électronique 30 pour identifier la barrique.

Par le terme « barrique », il est entendu tout contenant comportant des douelles.

Par exemple, un tonneau, un quartaut, un fût, une cuve, une jarre ou un foudre sont considérés dans le cadre de la présente description comme des barriques.

La barrique 200 comporte une paroi présentant une face intérieure et une face extérieure.

La face intérieure est une surface fermée de sorte que la face intérieure délimite un volume interne à la barrique 200.

La barrique 200 isole le volume interne de l'extérieur de la barrique 200.

Selon l'exemple décrit, le volume interne est destiné à recevoir une boisson alcoolisée.

En l'occurrence, le volume interne contient du vin.

Selon d'autres exemples, le volume interne contient du spiritueux ou du jus.

Usuellement, le volume interne comporte une boisson, de sorte que la barrique 200 est une barrique de liquide, et plus spécifiquement de boisson.

Le volume interne présente une capacité qui peut être exprimée notamment en litre.

La capacité du volume interne est la capacité de la barrique 200.

Par exemple, la capacité est comprise entre 1 et 1500 litres.

Selon un exemple, la capacité est comprise entre 100 litres et 600 litres, de préférence entre 100 et 400 litres.

Selon l'exemple décrit, la barrique 200 a une capacité de 228 litres.

La face externe de la paroi donne une forme à la barrique 200.

La barrique 200 présente un axe de symétrie permettant de définir une direction longitudinale. La direction longitudinale est symbolisée par un axe L sur la figure 4. La direction longitudinale est ainsi notée direction longitudinale L dans la suite de la description.

La barrique 200 s'étend le long de la direction longitudinale L entre une première extrémité 202 et une deuxième extrémité 204.

La distance entre la première extrémité 202 et la deuxième extrémité 204 de la barrique 200 définit la longueur de la barrique 200.

La longueur de la barrique 200 est de quelques mètres.

Dans chaque plan perpendiculaire à la direction longitudinale L, la section de la barrique 200 présente la même forme géométrique.

Selon l'exemple de la figure 4, la forme géométrique est un disque pour lequel un rayon est défini.

Lorsque les sections de la barrique 200 sont parcourues depuis la première extrémité 202 vers la deuxième extrémité 204, le rayon de la section augmente depuis un premier rayon minimal jusqu'à un rayon maximal puis diminue jusqu'à un deuxième rayon minimal.

Le premier rayon minimal est égal au deuxième rayon minimal.

Dans une telle configuration, le rayon maximal est atteint à un point correspondant au centre de la barrique 200.

Le rapport entre le rayon minimal et le rayon maximal est supérieur ou égal à 80 % de sorte que la barrique 200 présente une forme cylindrique légèrement bombée au niveau du centre.

La paroi de la barrique 200 comporte trois parties : une paroi latérale 206 et deux fonds 208.

La paroi latérale 206 est formée par des douelles 210 assemblées par des cerclages 212.

Les douelles 210 sont des planches.

Les douelles 210 s'étendent entre la première extrémité 202 de la barrique 200 et la deuxième extrémité 204 de la barrique 200.

Les douelles 210 sont, par exemple, réalisées en bois.

Selon un autre exemple, les douelles 210 sont réalisées en plastique, en céramique ou en acier inoxydable.

Comme visible sur la figure 4, les douelles 210 délimitent un trou de bonde 214.

Le trou de bonde 214 est un trou traversant destiné à être bouché par une bonde.

Le trou de bonde 214 permet à un opérateur de surveiller la barrique 200.

Chaque cerclage 212 est un cerclage de maintien. Les cerclages 212 assurent l'assemblage et le maintien des douelles 210 en position.

Chaque cerclage 212 est positionné parallèlement aux fonds 208, c'est-à-dire perpendiculairement à la direction longitudinale L.

Chaque cerclage 212 présente une forme annulaire complète pour laquelle un périmètre est défini.

Cela signifie que le cerclage entoure les douelles 210 de manière continue.

Pour cela, les cerclages 212 sont fixés aux douelles 210, par exemple par de la visserie.

La forme annulaire est spécifique puisque le rayon du disque délimité par le cerclage 212 évolue de manière monotone le long de la direction longitudinale L.

La forme annulaire s'étend le long de la direction longitudinale L entre une première extrémité et une deuxième extrémité. La distance entre les extrémités le long de la direction longitudinale L est appelée longueur du cerclage 212.

La longueur du cerclage 212 est comprise entre 3 centimètres et 7 centimètres.

Chaque cerclage 212 est réalisé en métal.

Chaque cerclage 212 comporte deux tenons 216.

Le rapport entre la distance entre deux tenons 216 et le périmètre d'un cerclage 212 est inférieur ou égal à 20 % de sorte que les deux tenons 216 sont situés au voisinage l'un de l'autre.

Les deux tenons 216 délimitent un espace 220 entre les deux tenons 216 consécutifs.

L'espace 220 définit une surface de la barrique 200 d'une première couleur apparente pour un utilisateur.

La première couleur apparente est, par exemple, le gris.

En variante, le nombre de tenons 216 est différent.

Par exemple, le nombre de tenons 216 est supérieur ou égal à trois.

Selon l'exemple décrit, la barrique 200 comporte six cerclages 212.

Les six cerclages 212 sont positionnés de manière symétrique par rapport au centre de la barrique 200.

En variante, le nombre de cerclages 212 est différent.

Par exemple, le nombre de cerclages 212 est égal à deux, quatre ou huit.

De manière générale, le nombre de cerclages 212 est pair pour permettre un positionnement symétrique par rapport au centre de la barrique 200.

Chaque fond 208 est un disque de même rayon, à savoir le rayon minimal.

Le premier fond 208 est la première extrémité 202 de la barrique 200 tandis que le deuxième fond 208 est la deuxième extrémité 204 de la barrique 200.

Dans l'exemple décrit, les fonds 208 sont symétriques par rapport à un plan normal à la direction longitudinale L et passant par le centre de la barrique 200.

Selon l'exemple de la figure 4, la puce 30 est située sur un cerclage 212.

En particulier, la puce 30 est apposée sur un espace 220 d'un cerclage 212.

En variante, la barrique 200 est dépourvue de cerclages 22. C'est le cas, par exemple, lorsque les douelles 210 sont réalisées en acier inoxydable.

Selon cette variante, la puce 30 est apposée, par exemple, sur une douelle 210 ou sur un fond 208 de la barrique 200.

La puce 30 selon ce mode de réalisation est décrite dans la suite par différence avec la puce 30 de la figure 2.

Notamment, la puce 30 présente une forme cylindrique dont la base est un disque présentant un diamètre.

Selon l'exemple proposé, le diamètre du disque est compris entre 20 millimètres et 30 millimètres.

Chaque couche S, E, P, Q présente une forme cylindrique présentant la même base que la puce 30.

En variante, la puce 30 présente une autre forme.

Par exemple, la base de la puce 30 présente une forme rectangulaire.

Selon ce mode de réalisation, la couche support S comporte, en outre, une sous-couche de liaison.

La sous-couche de liaison assure une lecture de la puce 30 sur une surface réalisée en métal.

La sous-couche de liaison est située entre la sous-couche adhésive C2 et la couche à puce électronique (E) selon la direction d'empilement.

La sous-couche de liaison présente une épaisseur inférieure ou égale à 30 µm.

La sous-couche de liaison est réalisée en ferrite.

Selon une variante, la sous-couche de liaison est réalisée dans un alliage de ferrite.

La sous-couche de décoration C6 présente une deuxième couleur apparente pour l'utilisateur.

Selon l'exemple décrit, la deuxième couleur apparente est le gris.

La première couleur apparente de la surface de la barrique 200 définie par l'espace 220 entre les deux tenons 216 et la deuxième couleur apparente de la sous-couche de décoration C6 sont, de préférence, identiques.

Selon ce mode de réalisation, la couche de protection Q est dépourvue de sous-couche d'ornement C8.

Le fonctionnement de la puce 30 est maintenant décrit.

La barrique de boisson alcoolisée 200 présentant une surface munie de la puce 30 est présente chez un fabricant de barriques ou chez un propriétaire mettant en œuvre le vieillissement d'une boisson alcoolisée dans la barrique 200.

L'aspect visuel de la puce 30 est raccord avec l'aspect visuel de l'espace 220 définissant une surface sur laquelle la puce 30 est collée. Un utilisateur ne voit pas la partie électronique de la puce 30. Ainsi, l'utilisateur a l'impression visuelle que la puce 30 est absente.

Pendant le transport de la barrique 200 entre le fabricant de barriques et le propriétaire ainsi qu'à la propriété, la puce 30 n'est pas arrachée par un utilisateur mal intentionné et peut être utilisée par un opérateur à la propriété.

L'opérateur peut lire, à l'aide d'un lecteur de puce électronique, des informations stockées dans la mémoire de la puce 30.

Dans ce mode de réalisation, la mémoire 74 de la puce 30 mémorise, par exemple, des informations relatives à la pression de la boisson alcoolisée contenue à l'intérieur de la barrique 200.

Selon un autre exemple, la mémoire 74 mémorise des informations relatives à l'oxygénation de la boisson alcoolisée contenue dans la barrique 200.

Selon un autre exemple, la mémoire 74 de la puce 30 mémorise des informations relatives au site de fabrication de la barrique 200, à un identifiant de la barrique 200, à un identifiant du fabricant de la barrique 200, des données de date et heure de remplissage et de vidage de la barrique 200.

Une telle puce 30 présente l'avantage d'être discrète et raccord avec la surface sur laquelle elle est apposée.

La puce 30 permet de suivre l'évolution de la boisson alcoolisée au cours de son vieillissement sans erreur, d'assurer une traçabilité optimale de la barrique 200 et de la boisson alcoolisée contenue dans la barrique 200 et ainsi d'éviter les contrefaçons.

La fabrication de la puce 30 diffère de la fabrication décrite pour le premier mode de réalisation en ce qu'elle ne comprend pas d'étape de réalisation de la sous-couche d'ornement C8.

La mise en place de la puce 30 sur la barrique 200 peut être réalisée chez le fabricant de la barrique 200 ou à la propriété où a lieu le vieillissement de la boisson alcoolisée dans la barrique 200.

Dans tous les modes de réalisation proposés, la puce électronique 30 peut prendre n'importe quelle apparence colorée souhaitée.

Notamment, le conteneur de boisson alcoolisée présente une surface ayant une première couleur apparente pour un utilisateur, et la sous-couche de décoration C6 de la couche de personnalisation P de l'étiquette 30 présente également une deuxième couleur apparente identique à la première couleur apparente.

Selon un autre mode de réalisation spécifique, la puce 30 présente une couche de protection transparente supplémentaire en contact avec la couche la plus haute décrite dans les modes de réalisation précédents.

Ainsi, par exemple, pour le cas de la figure 2, la puce 30 présente une neuvième couche de protection en contact avec la huitième couche.

La couche de protection transparente est, par exemple, adhésive et est collée sur la couche la plus haute.

La couche de protection permet de protéger la sérigraphie de détériorations et permet également d'avoir une finition brillante ou mate de l'étiquette 30 en fonction du matériau choisi pour réaliser la couche de protection.

Notamment, un plastique est un film plastique ayant un effet calque. En particulier, le plastique est un film plastique utilisé pour faire des pochettes plastiques propres à contenir des documents.

Selon un mode de réalisation particulier, la puce 30 apposée sur un espace 220 d'un cerclage 212 d'une barrique 200 est une étiquette RFID, l'étiquette RFID pouvant être une étiquette telle que précédemment décrite ou une étiquette différente. L'étiquette RFID comprend un microprocesseur associé à une antenne permettant l'échange de signaux. Le microprocesseur comporte aussi une mémoire propre à mémoriser des informations.

Une telle puce 30 présente l'avantage que lorsque la barrique 200 est déplacée par un opérateur la faisant rouler sur le sol, la puce 30 n'entre pas en contact avec le sol et son fonctionnement n'est, par conséquent, pas altéré.

L'invention correspond à toutes combinaisons techniquement possibles des modes de réalisation précédemment décrits.

## Revendications

1. Étiquette à puce électronique (30) destinée à être déposée sur une barrique (200) de liquide, notamment de boisson alcoolisée ou de parfum, l'étiquette comportant :
- une première couche (S), dite couche support (S),
- une deuxième couche (E), dite couche à puce électronique (E), comprenant au moins une puce électronique et une antenne connectée à la puce électronique, la couche à puce électronique comportant une première face en contact avec la couche support et une deuxième face opposée à la première face, et
- une troisième couche (P), dite couche de personnalisation (P), comportant une première face en contact avec la deuxième face de la couche à puce électronique et une deuxième face opposée à la première face de la couche de personnalisation (P),
dans laquelle chaque couche (S, E, P) comporte deux faces et les trois couches (S, E, P) sont superposées selon une direction d'empilement,
et dans laquelle la couche de personnalisation (P) comprend au moins une sous-couche (C5), dite sous-couche métallique (C5), réalisée dans un matériau métallique, la sous-couche métallique (C5) présentant une épaisseur le long de la direction d'empilement inférieure ou égale à 35 micromètres.

2. Étiquette (30) selon la revendication 1, dans laquelle le matériau métallique est de l'argent ou de l'aluminium.

3. Étiquette (30) selon la revendication 1 ou 2, comportant, en outre, une couche de protection (Q) en contact avec la deuxième face de la couche de personnalisation (P), la couche de protection (Q) comprenant au moins une sous-couche de couverture (C7) laissant un utilisateur voir la couche de personnalisation (P) à travers la sous-couche de couverture (C7).

4. Étiquette (30) selon l'une quelconque des revendications 1 à 3, dans laquelle la couche de personnalisation (P) comprend, en outre, une sous-couche d'interfaçage (C4) réalisée en polyéthylène téréphtalate, la sous-couche d'interfaçage (C4) étant en contact d'une part avec la couche à puce électronique (E) et d'autre part avec la sous-couche métallique (C5).

5. Étiquette (30) selon l'une quelconque des revendications 1 à 4, dans laquelle la couche de personnalisation (P) présente une sous-couche de décoration (C6) destinée à donner l'impression visuelle à un utilisateur que l'étiquette (30) est décorée.

6. Barrique (200) de liquide, notamment de boisson alcoolisée ou de parfum, comportant une surface sur laquelle l'étiquette (30) selon l'une quelconque des revendications 1 à 5 est collée.

7. Ensemble (10) comportant une barrique (200) de liquide, notamment de boisson alcoolisée, et une étiquette (30) selon l'une quelconque des revendications 1 à 6, dans lequel la barrique de liquide (200) présente une surface ayant une première couleur apparente pour un utilisateur, et dans lequel la sous-couche de décoration (C6) de la couche de personnalisation (P) de l'étiquette (30) présente également une deuxième couleur apparente pour l'utilisateur, la première et la deuxième couleur apparente étant identiques.

8. Procédé de fabrication de l'étiquette (30) selon l'une quelconque des revendications 1 à 5, le procédé comportant au moins les étapes suivantes :
- la fourniture d'un substrat (70);
- la gravure d'une puce électronique et d'une antenne (76) sur le substrat (70) pour former une couche à puce électronique (E);
- le dépôt d'une couche de personnalisation (P) sur la couche à puce électronique (E) selon la direction d'empilement pour former un sandwich (PE), et
- le dépôt du sandwich (PE) sur une couche support (S) selon la direction d'empilement pour former une structure multicouche.

## Patentansprüche

1. Etikett mit einem elektronischen Chip (30), welches dafür bestimmt ist, an einer Fass (200) für Flüssigkeit, insbesondere für ein alkoholisches Getränk oder für ein Parfüm, angeordnet zu sein, wobei das Etikett aufweist:
- eine erste Schicht (S), welche Trägerschicht (S) genannt wird,
- eine zweite Schicht (E), welche Elektronischer-Chip-Schicht (E) genannt wird und welche aufweist mindestens einen elektronischen Chip und eine Antenne, welche mit dem elektronischen Chip verbunden ist, wobei die Elektronischer-Chip-Schicht aufweist eine erste Fläche, welche mit der Trägerschicht in Kontakt ist, und eine zweite Fläche, welche entgegengesetzt zur ersten Fläche ist, und
- eine dritte Schicht (P), welche Personalisierungsschicht (P) genannt wird und welche aufweist eine erste Fläche, welche in Kontakt mit der zweiten Fläche der Elektronischer-Chip-Schicht ist, und eine zweite Fläche, welche entgegengesetzt zur ersten Fläche der Personalisierungsschicht (P) ist,
wobei jede Schicht (S, E, P) zwei Flächen aufweist und die drei Schichten (S, E, P) entlang einer Stapelrichtung gestapelt sind,
und wobei die Personalisierungsschicht (P) mindestens eine Subschicht (C5) aufweist, welche metallische Subschicht (C5) genannt wird und welche aus einem metallischen Material hergestellt ist, wobei die metallische Subschicht (C5) eine Dicke entlang der Stapelrichtung hat, welche kleiner oder gleich 35 Mikrometern ist.

2. Etikett (30) gemäß Anspruch 1, wobei das metallische Material Gold oder Aluminium ist.

3. Etikett (30) gemäß Anspruch 1 oder 2, welche ferner eine Schutzschicht (Q) aufweist, welche mit der zweiten Fläche der Personalisierungsschicht (P) in Kontakt ist, wobei die Schutzschicht (Q) mindestens eine Abdeckungssubschicht (C7) aufweist, welche einen Nutzer die Personalisierungsschicht (P) durch die Abdeckungssubschicht (C7) hindurch sehen lässt.

4. Etikett (30) gemäß irgendeinem der Ansprüche 1 bis 3, wobei die Personalisierungsschicht (P) ferner eine Schnittstelle-Subschicht (C4) aufweist, welche aus Polyethylenterephthalat hergestellt ist, wobei die Schnittstelle-Subschicht (C4) einerseits mit der Elektronischer-Chip-Schicht (E) und andererseits mit der metallischen Subschicht (C5) in Kontakt ist.

5. Etikett (30) gemäß irgendeinem der Ansprüche 1 bis 4, wobei die Personalisierungsschicht (P) eine Dekorationssubschicht (C6) hat, welche dazu bestimmt ist, einem Nutzer den visuellen Eindruck zu vermitteln, dass das Etikett (30) dekoriert ist.

6. Fass (200) für eine Flüssigkeit, insbesondere für ein alkoholisches Getränk oder für ein Parfüm, welche eine Fläche aufweist, auf welche das Etikett (30) gemäß irgendeinem der Ansprüche 1 bis 5 geklebt ist.

7. Anordnung (10), welche aufweist eine Fass (200) für eine Flüssigkeit, insbesondere für ein alkoholisches Getränk oder für ein Parfüm, und ein Etikett (30) gemäß irgendeinem der Ansprüche 1 bis 6, wobei die Flasche für eine Flüssigkeit (20) eine Fläche hat, welche eine erste für einen Nutzer sichtbare Farbe hat, und wobei die Dekorationssubschicht (C6) der Personalisierungsschicht (P) des Etiketts (30) gleichermaßen eine zweite für den Nutzer sichtbare Farbe hat, wobei die erste und die zweite sichtbare Farbe identisch sind.

8. Verfahren zum Herstellen des Etiketts (30) gemäß irgendeinem der Ansprüche 1 bis 5, wobei das Verfahren mindestens die folgenden Schritte aufweist:
- das Bereitstellen eines Substrats (70),
- das Ätzen eines elektronischen Chips und einer Antenne (76) auf dem Substrat (70), um eine Elektronischer-Chip-Schicht (E) zu bilden,
- das Abscheiden einer Personalisierungsschicht (P) auf der Elektronischer-Chip-Schicht (E) entlang der Stapelrichtung, um ein Sandwich (PE) zu bilden, und
- das Abscheiden des Sandwiches (PE) auf einer Trägerschicht (S) entlang der Stapelrichtung, um eine Mehrschichtstruktur zu bilden.

## Claims

1. A label comprising an electronic chip (30) intended to be applied on a barrel (200) of liquid, in particular for an alcoholic beverage or perfume, the label including:
- a first layer (S), called support layer (S),
- a second layer (E), called electronic chip layer (E), comprising at least an electronic chip and an antenna connected to the electronic chip, the electronic chip layer including a first face in contact with the support layer and a second face opposite the first face, and
- a third layer (P), called customization layer (P), having a first face in contact with the second face of the electronic chip layer and a second face opposite the first face of the customization layer (P),
in which each layer (S, E, P) has two faces and the three layers (S, E, P) are superimposed in a stacking direction,
and wherein the customization layer (P) comprises at least one sublayer (C5), called metal sublayer (C5), made from a metal material, the metal sublayer (C5) having a thickness along the stacking direction being less than or equal to 35 micrometers.

2. The label (30) according to claim 1, wherein the metal material is silver or aluminum.

3. The label (30) according to claim 1 or 2, further including a protection layer (Q) in contact with the second face of the customization layer (P), the protection layer (Q) comprising at least a covering sublayer (C7) allowing a user to see the customization layer (P) through the covering sublayer (C7).

4. The label (30) according to any one of claims 1 to 3, wherein the customization layer (P) further comprises an interfacing sublayer (C4) made from polyethylene terephthalate, the interfacing sublayer (C4) being in contact on the one hand with the electronic chip layer (E) and on the other hand with the metal sublayer (C5).

5. The label (30) according to any one of claims 1 to 4, wherein the customization layer (P) has a decorative sublayer (C6) intended to give the user the visual impression that the label (30) is decorated.

6. A barrel (200) of liquid, in particular alcoholic beverage or perfume, having a surface on which the label (30) according to any one of claims 1 to 5 is glued.

7. An assembly (10) including a barrel (200) of liquid, in particular alcoholic beverage, and a label (30) according to any one of claims 1 to 6, in which the bottle of liquid (20) has a surface having a first color visible to a user, and in which the decorative sublayer (C6) of the customization layer (P) of the label (30) also has a second color visible to the user, the first and second visible colors being identical.

8. A method for manufacturing the label (30) according to any one of claims 1 to 5, the method including at least the following steps:
- providing a substrate (70);
- etching an electronic chip and an antenna (76) on the substrate (70) to form an electronic chip layer (E);
- depositing a customization layer (P) on the electronic chip layer (E) in the stacking direction to form a sandwich (PE), and
- depositing the sandwich (PE) on a support layer (S) in the stacking direction to form a multilayer structure.
